# EUROPÄISCHE PATENTSCHRIFT

(11) **EP 1 086 900 B1**
(45) Veröffentlichungstag und Bekanntmachung des Hinweises auf die Patenterteilung: **13.08.2003**
(21) Anmeldenummer: 00119873.8
(22) Anmeldetag: 13.09.2000
(51) Int. Cl.: B65C 3/06

(54) **Verfahren zur Herstellen von leeren oder gefüllten tiefgezogenen Behältern aus thermoplastischem Kunststoff, deren Wand mit einem Etikett versehen ist, und Vorrichtung zur Durchführung des Verfahrens**
Method for producing empty or filled deep drawn containers made of thermoplastic material, which have a lable on the outer wall, and device for carrying out this method
Procédé de fabrication de récipients pleins ou creux en matière thermoplastique avec une étiquette sur la paroi extérieure et dispositif pour la mise en oeuvre du procédé

(30) Priorität: 13.05.2000 DE 10023658; 22.09.1999 DE 29916659 U
(43) Veröffentlichungstag der Anmeldung: 28.03.2001
(73) Patentinhaber: Illig, Adolf Maschinenbau GmbH & Co., 74081 Heilbronn (DE); Wilke, Werner Heinz, 40878 Ratingen (DE)
(72) Erfinder: Hannig, Harald, 74081 Heilbronn (DE); Wilke, Werner Heinz, 40878 Ratingen (DE)

(56) Entgegenhaltungen:
- EP-A- 0 560 687
- EP-A- 1 016 595
- US-A- 5 759 337
- US-A- 5 879 506

## Beschreibung

Die Erfindung betrifft ein Verfahren mit den Merkmalen des Oberbegriffes des Patentanspruches 1 sowie eine Vorrichtung zur Durchführung des Verfahrens.

Es sind verschiedene Verfahren zum Etikettieren von Behältern bekannt. Ein Verfahren, wie es z. B. in der DE 33 26 369 A1 beschrieben ist, besteht darin, Etiketten in die Tiefziehformen einzulegen und die erwärmte Kunststofffolie in diese hineinzuziehen, sodass eine Verbindung beider Teile eintritt. Dieses Verfahren ist sehr aufwendig, störungsanfällig und verringert die Taktzahl der Vorrichtung, da das Einlegen eine bestimmte Zeit erfordert. Pro Formnest muss eine Zuführeinrichtung vorgesehen sein. Zum Einlegen muss das Werkzeug weit geöffnet oder sogar verschoben werden. Das Rüsten des Werkzeuges dauert sehr lange. Dies alles führt zu relativ hohen Etikettierungskosten. Die Handhabung der Etiketten führt zu Staubanfall, wenn diese aus Papier oder dünnem Karton bestehen. Dieser kann aus hygienischen Gründen nicht in allen Fällen im Bereich der Formmaschine akzeptiert werden, da er in die Kavitäten gelangen kann.

Aus der EP 0560 687 A1 ist es bekannt, geformte Etiketten auf die Wandung von Behältern aufzubringen, indem die Etiketten in verschiebbare Formen eingelegt, festgehalten und dann die geformten, gefüllten und ausgestanzten Behälter in diese eingesetzt werden. Die Verbindung Etikett/Behälter erfolgt durch Hinterschnitte, Noppen und andere formschlüssige Elemente. Dieses Verfahren erfordert also außer dem Formwerkzeug zum Herstellen der Behälter ein weiteres Formwerkzeug zum Verbinden der Behälter mit einem Etikett und eine hohe Anzahl von Handlingseinrichtungen, da die etikettierten Behälter aus den Formen auch wieder entnommen werden müssen. Dies ist teuer. Die Handhabung sowohl der Etiketten als auch der einzelnen ausgestanzten Behälter ist aufwendig und störungsanfällig.

Aus der DE 44 17 648 A1 ist ein Verfahren bekannt, bei dem auf die geformten, noch mit dem Behälterband verbundenen Behälter, vor ihrem Befüllen Etiketten aufgebracht werden. Dazu werden seitlich der Folienbahn auf Rollen angeordnete Etiketten von Greifem unter die Folienbahn gezogen, abgeschnitten und unter Zuhilfenahme der Behälterform geformt und auf diesen aufgelegt. Dazu führt die Folienbahn unterschiedliche Vorschubschritte durch, um das Aufbringen der Etiketten vornehmen zu können. In dieser Zeit kann keine Verformung des nächsten Behältemutzens erfolgen, weshalb die Taktzahl der Vorrichtung gering ist. Die Handhabung der Etikettenbahnen und Etikettiereinrichtung ist sehr diffizil und störungsanfällig. Zum Wechseln bzw. Nachfüllen der Etikettenrollen muss die Vorrichtung - auch aus Gründen der Arbeitssicherheit - angehalten und neu eingerichtet werden. Da die Behälter selbst als Formeinrichtung für das aufzubringende Etikett dienen besteht die Gefahr, dass diese deformiert werden, wenn sie nicht eine gewisse Stabilität aufweisen. Ein entsprechender Materialeinsatz ist erforderlich. Eine Etikettierung von Behältern mit konischer Seitenwand ist auf diese Weise nicht möglich.

Der Erfindung liegt die Aufgabe zugrunde, das Verfahren so durchzuführen, dass die Störungsanfälligkeit, bedingt durch häufiges Umsetzen, reduziert wird. Es sollte für das Etikettieren von konisch wie zylindrisch gestalteten leeren wie zuvor gefüllten Behältern mit geringer Wandstärke und damit bei geringer Stabilität geeignet sein. Probleme mit Papierstaub im Bereich des Formwerkzeuges sollten auf einfache Weise vermieden werden. Vom konstruktiven Aufwand her sollte das Verfahren nur relativ einfache, kostengünstige Bauteile erfordern.

Gelöst ist diese Aufgabe erfindungsgemäß durch die im Kennzeichen des Hauptanspruchs angegebenen Maßnahmen sowie durch eine Vorrichtung mit den Merkmalen des Anspruches 18. Die Unteransprüche stellen vorteilhafte Weiterbildungen dar. Dadurch, dass zuvor fertig geformte Etiketten auf die noch im Folienband hängenden Behälter aufgebracht werden, ist ein Handling einzelner ausgestanzter Behälter nicht erforderlich und man benötigt nur eine Einrichtung zum Überführen der Etiketten aus leicht nachzufüllenden Stapeln oder von einer vorgeschalteten Etikettiermaschine aus auf die frei zugängliche Unterseite der Behälter. Das Etikettieren erfolgt nach einem kompletten Transport des Folienbandes um einen Vorschubschritt, während ein neuer Nutzen geformt wird, sodass durch das Etikettieren keine Taktzeitverlängerung gegeben ist.

Das Verfahren und die Vorrichtung nach der Erfindung sind anhand der schematischen Zeichnungen näher beschrieben. Es zeigt:
- Figur 1 -: eine Seitenansicht der Vorrichtung zur Durchführung des Verfahrens.
- Figur 2: eine Draufsicht auf die Vorrichtung und die beigestellte Etikettenformmaschinen.
- Figur 3: einen Längsschnitt durch die Etikettierstation entlang der Linie A - A in Figur 2.
- Figur 4: einen Querschnitt durch die Etikettierstation entlang der Linie B - B in Figur 2
- Figur 5: eine Draufsicht auf die Vorrichtung mit beigestellten Etikettenmagazinen.
- Figur 6: einen Längsschnitt durch die Etikettierstation bei einer Variation des Verfahrens.
- Figur 7: einen Querschnitt durch die Etikettierstation gemäß Variante Figur 6
- Figur 8: eine Draufsicht auf einen Teil der Vorrichtung bei einer weiteren Variante des Verfahrens.
- Figur 9: einen Schnitt entlang der Linie C - C in Figur 8.
- Figur 10: einen Schnitt entlang der Linie D - D in Figur 8.
- Figur 11: eine Draufsicht auf ein Folienband mit versetzt angeordneten Behältern

Die Vorrichtung zur Durchführung des Verfahrens besteht aus einer Behälterformmaschine 8 mit einer Heizstation 1 zur Erwärmung eines Abschnittes der von der Rolle 2 abgezogenen Folienbahn 3, die von einer intermittierend arbeitenden Transporteinrichtung 4, z. B. in Form von Greiferleisten 21, einer Formstation 5 zugeführt wird. In dieser Formstation 5 erfolgt das Verformen der Folienbahn 3 durch Druckluft und/oder Vakuum mit Hilfe des Formwerkzeuges 6 zu Behältern 14, die noch mit der Folienbahn 3 verbunden sind. In der Regel werden zwei oder drei Reihen mit mehreren Behältern 14 pro Takt verformt. Im dargestellten Beispiel werden drei Reihen mit je vier Behältern 14 pro Takt hergestellt.

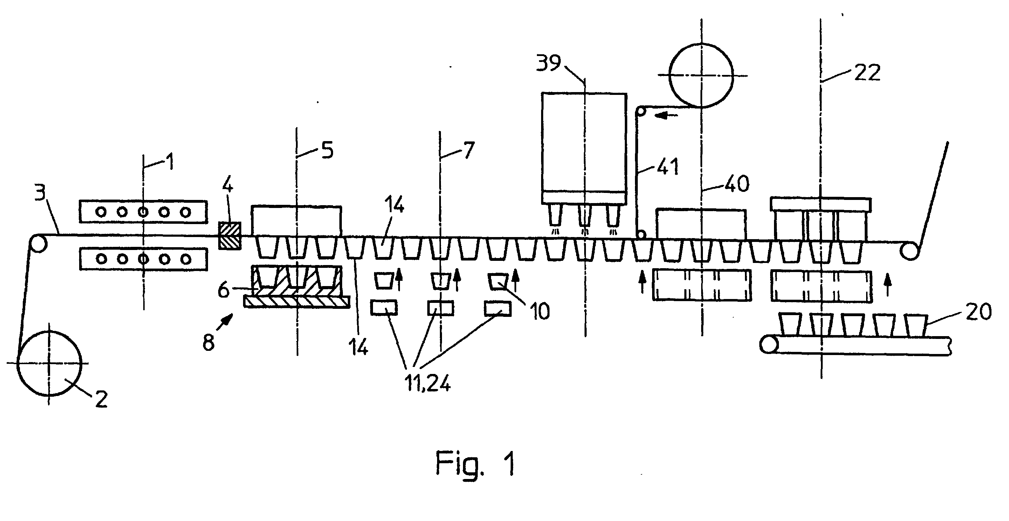

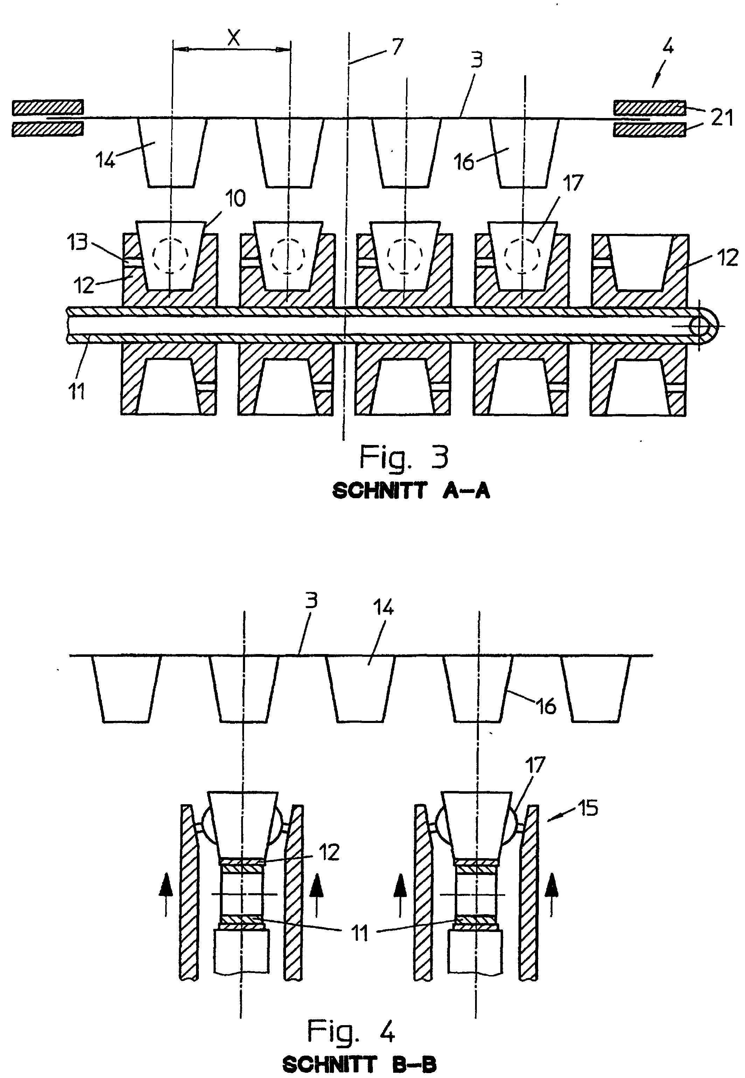

Nach dem Öffnen des Werkzeuges 6 gelangt die weitertransportierte Folienbahn 3 in die Etikettierstation 7. Gemäß einer ersten Ausführungsform der Erfindung (siehe Figuren 1 bis 4) sind neben der Behälterformmaschine 8 Etikettenformmaschinen 9 angeordnet, die in bekannter Weise aus Etikettenbändem oder aus gestapelten Zuschnitten 35 hülsenförmige Etiketten 10 mit zylindrischer oder konischer Form herstellen und ausgeben. Diese geformten Etiketten 10 werden in ein Kammerband 11 gesetzt, das eine Reihe umlaufender, intermittierend bewegter Kammern 12 aufweist, die der Etikettenform angepasst sind. Die Übergabe der Etiketten 10 in das Kammerband 11 erfolgt entweder direkt nach der Formung aus der Etikettenformmaschine 9 oder über einen Zwischenpuffer 19, aus dem eine Entnahmeeinrichtung, die durch Pfeile 36 dargestellt ist, die Etiketten 10 entnimmt und in die Kammern 12 einsetzt. Vorzugsweise weisen die Kammern 11 einen Vakuumanschluss 13 auf, über den durch Anlegen von Vakuum ein Festhalten und in Form halten der Etiketten 10 von der Aufnahme der Etiketten 10 bis zur Abgabe erfolgt.

Pro Behälterreihe sind eine Etikettenformmaschine 9 und ein Kammerband 11 vorgesehen, wobei die Etikettenformmaschine 9 bei vier Behältern 14 pro Reihe zwei Formeinheiten im Abstand Y aufweist. Das Kammerband 11 führt nach dem Einlegen von zwei Etiketten 10 einen Vorschubschritt um einen Behälterabstand X durch, so dass die nächsten zwei Etiketten 10 in freie Kammern 12 eingelegt werden können. Die Etikettenformmaschine 9 und die Kammerbänder 11 vollziehen also zwei Takte bei einem Takt der Behälterformmaschine 8. Bedingt ist dies durch den in der Regel erforderlichen größeren Abstand Y zwischen den Etikettenformeinrichtungen der Etikettenformmaschine 9 im Verhältnis zum Behälterabstand X.

Auf diese Weise führt jedes Kammerband 11 eine Reihe von Etiketten 10 im Abstand X der Behälter 14 unter jede Behälterreihe der Folienbahn 3 in die Etikettierstation 7. Aus Platzgründen ist es auch hier in der Regel erforderlich, die Kammerbänder 11 im doppelten oder dreifachen Abstand Z der Behälterreihen anzuordnen. Zwischen jedem Kammerband 11 und der Folienbahn 3 ist jeweils eine Übergabeeinrichtung 15 angeordnet, die die Etiketten 10 aus den Kammern 12 entnimmt, nach oben führt und dabei auf die Wand 16 der Behälter 14 aufzieht. Vorzugsweise weist die Übergabeeinrichtung 15 hierfür Sauger 17 auf, die die Etiketten 10 an der Außenfläche ansaugen und in Form halten, so dass die Übergabe auf die Behälterwand 16 auch bei zylindrischen Behältern 14 erfolgen kann, die hierfür am Übergang Behälterboden zu Behälterwand 16 entsprechend konisch oder mit einem Einführungsradius versehen sein müssen. Bei konisch verlaufenden Behälterwänden 16 ist das Einführen konisch gestalteter Etiketten 10 unproblematischer.

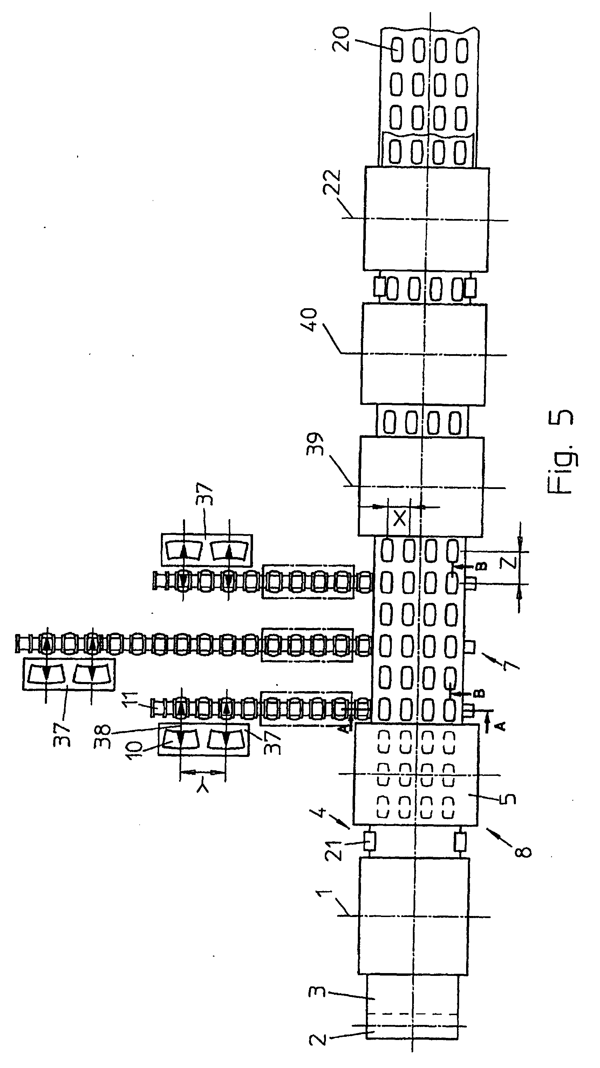

Figur 5 zeigt eine Abwandlung des Verfahrens in der Weise, das anstelle von Etikettenformmaschinen 9 Stapelmagazine 37 vorgesehen sind, in die vorgefertigte verklebte Etiketten 10 stapelweise eingelegt werden. Die Etiketten 10 können dabei gefaltet und flach aufeinangerliegend sein. Sie werden dann bei der Entnahme entfaltet und in aufgerichteter Position in die Kammern 12 eingesetzt. Oder sie sind gerollt und sitzen ineinander gestapelt vergleichbar Becherstapeln, sodass sie entnommen und direkt in die Kammern 12 eingesetzt werden können. Eine Entnahmeeinrichtung, dargestellt durch Pfeile 38, entnimmt dabei diese Etiketten 10, entfaltet bzw. entstapelt sie und übergibt sie in die Kammern 12 des Kammerbandes 11. Wieder finden zwei Übergaben von Etiketten 10 während eines Taktes der Behälterformmaschine 8 in gleicher Weise wie zuvor beschrieben statt.

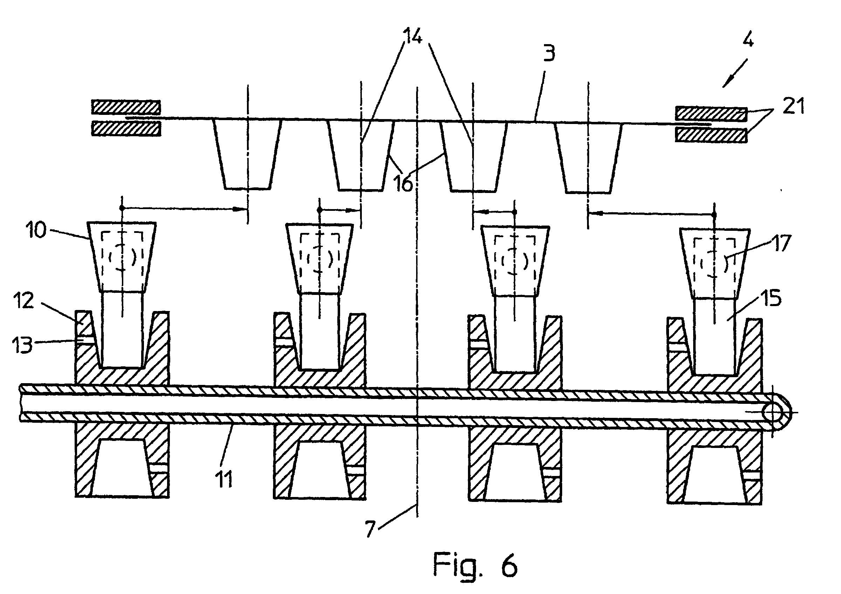

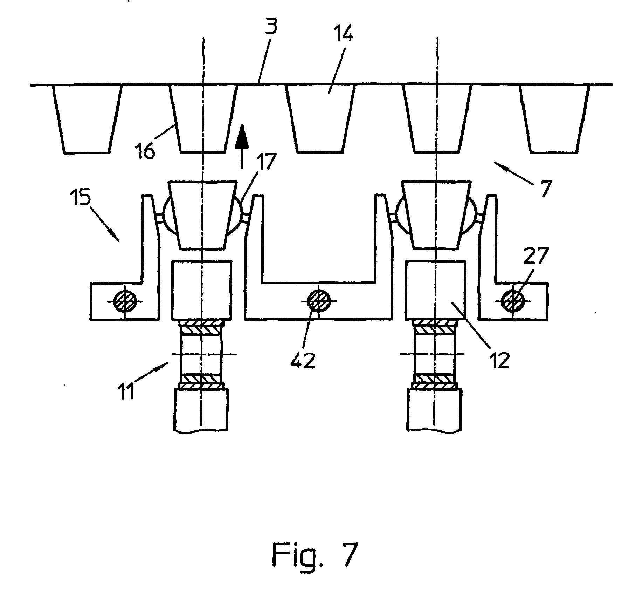

Ist es während der optimal möglichen Taktzeit der Behälterformmaschine 8 nicht möglich, zwei Übergaben von Etiketten 10 in das Kammerband 11 vorzunehmen, würde dieses Übergeben die Taktzeit der Vorrichtung verlängern. Dem kann dadurch begegnet werden, dass die Anzahl der ausgegebenen Etiketten pro Etikettenformmaschine 9 bzw. die Anzahl von Stapeln von Etiketten 10 in den Stapelmagazinen 37 der Anzahl von Behältern 14 pro Behälterreihe angepasst wird. Im vorliegenden Beispiel also jeweils auf vier. In diesem Fall müssen dann die Kammern 12 auf dem Kammerband 11 im Abstand Y angebracht werden und in der Etikettenstation 7 erfolgt nach dem Ausheben der Etiketten 10 mittels der Übergabeeinrichtung 15 eine horizontale Verschiebung der Sauger 17 an Führungen 42 vom Abstand Y auf den Abstand X durch nicht dargestellte Antriebe ( siehe Pfeile in Figur 6 ). Wie die Vorrichtung hierzu ausgestaltet ist zeigen die Figuren 6 und 7.

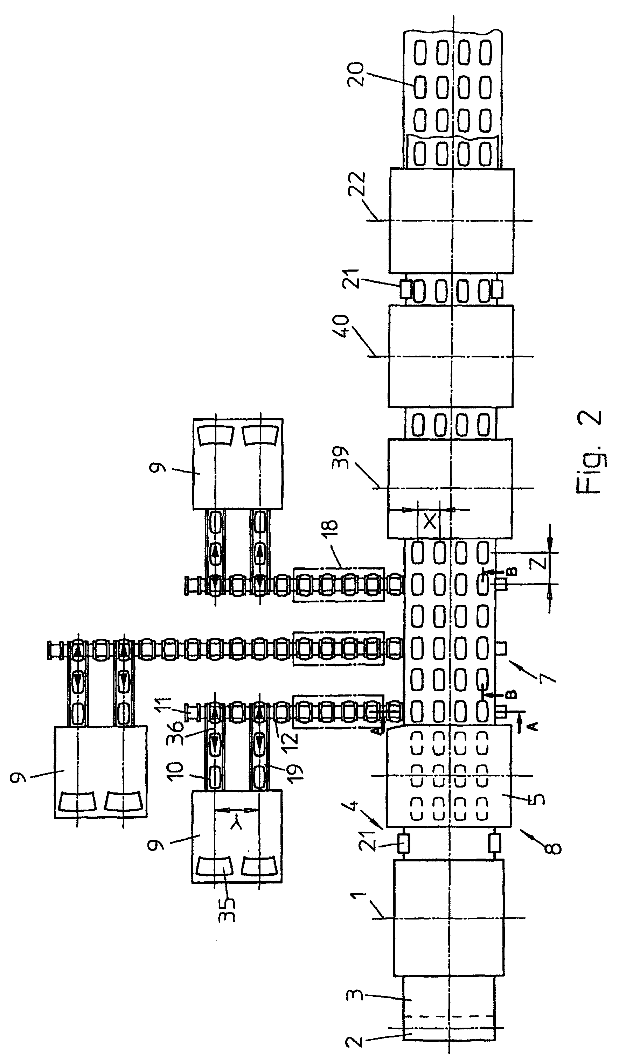

Je nach gewünschtem Verbindungsverfahren zwischen Behälterwand 16 und Etikett 10 wird wahlweise vorgeschlagen, die Etiketten 10 an der Innenseite oder die Behälterwand 16 außen mit Kleber zu versehen. Schematisch ist hierfür entweder eine oberhalb eines jeden Kammerbandes 11 angeordnete Leimauftragseinrichtung 18 dargestellt ( Figur 2 ), die Kleber örtlich auf der Innenseite eines jeden Etikettes 10 aufträgt. Oder diese Leimauftragsvorrichtung 18 ist zwischen Formstation 5 und Etikettierstation 7 angeordnet und so ausgebildet, dass sie örtlich Kleber auf die Behälterwand 16 eines jeden Behälters 10 auftragen kann.

Werden Etiketten 10 bereits vor oder während ihrer Fertigung mit einem heißaktivierbaren Kleber versehen, wird in Durchlaufrichtung hinter der Etikettierstation 7 eine nicht dargestellte Heizstation vorgesehen, die durch Beheizung den Kleber aktiviert. Bei Verwendung von Etiketten 10 aus schrumpffähigem Kunststoff kann diese Heizeinrichtung ebenfalls durch Erwärmung des Etikettes die Verbindung herbei führen. In beiden Fällen wird vorausgesetzt, dass die Behälterform so gestaltet ist, dass die Etiketten 10 soweit mechanisch, z.B. durch Hinterschneidungen, festgehalten werden, dass keine Verschiebung bis zum Erreichen der Heizstation gegeben ist oder es wird zusätzlich eine Verbindung durch Kleber herbeigeführt.

Der Etikettierstation 7 nachgeschaltet ist in jedem Falle eine Stanzstation 22, in der die Behälter 14 aus der Folienbahn 3 ausgeschnitten werden. Wahlweise kann die Behälterformmaschine 8 mit einer Fülleinrichtung 39 und einer Siegeleinrichtung 40 für eine Deckfolie 41 ausgerüstet werden, so dass fertige Verpackungen 20 die Vorrichtung verlassen. Fülleinrichtung 39 und Siegeleinrichtung 40 werden vorzugsweise zwischen Etikettierstation 7 und Stanzstation 22 angeordnet. Prinzipiell ist es aber auch möglich, diese Einrichtungen zwischen Formstation 5 und Etikettierstation 7 einzufügen, so dass also die Etikettierung an gefüllten und verschlossenen Behältern 14 erfolgt.

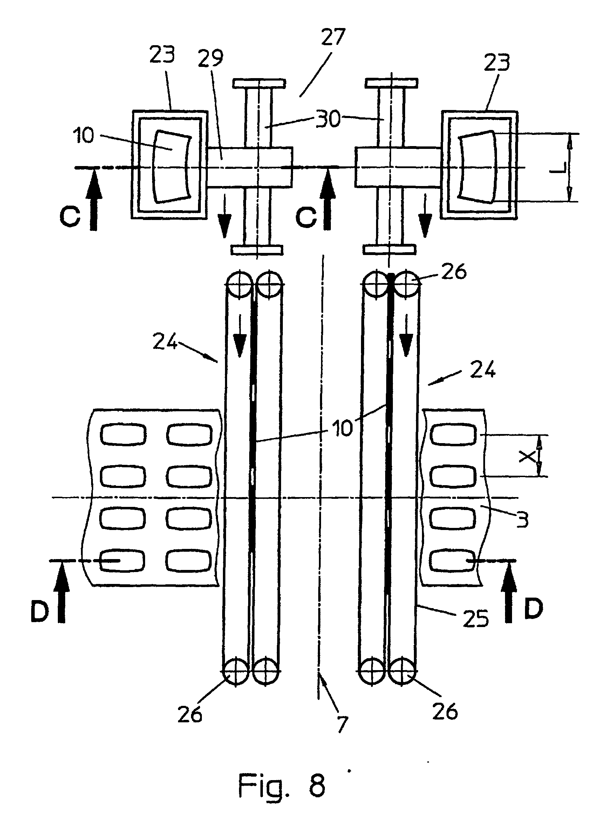

Ein anderes Etikettierverfahren ist in den Figuren 8 bis 10 dargestellt. In diesem Fall wird davon ausgegangen, dass gefaltete Etiketten 10 in Magazinen 23 bereitgehalten und aus diesen entnommen und in gefaltetem Zustand an eine Transporteinrichtung übergeben werden, die nachfolgend als Gurttransport 24 bezeichnet wird. Diese besteht aus paarweise umlaufenden, intermittierend bewegten Fördergurten 25, die so ausgebildet sind, dass sie zwischen sich klemmend die senkrecht stehenden und gefalteten Etiketten 10 aufnehmen können. Dazu laufen sie über Umlenkräder 26, die intermittierend durch einen nicht dargestellten Antrieb verdreht werden können. Aus den Magazinen 23 werden die Etiketten 10 von der Entnahmeeinrichtung 27 entnommen, bestehend aus Saugern 28, Schwenkarm 29 und Schwenkwelle 30, wobei der Schwenkarm 29 auch axial verschiebbar auf der Schwenkwelle 30 ausgebildet ist. Nach dem Ansaugen und Schwenken eines entnommenen Etikettes 10 wird dieses stehend und gefaltet so zwischen die Fördergurte 25 eingeführt, dass es von diesen kraftschlüssig erfasst wird. Da die gefalteten Etiketten 10 von der Länge L her größer sind als der Becherabstand X, werden diese auf doppelten Behälterabstand A gebracht und unter die Folienbahn 3 geführt. Das heißt, pro Behälterreihe sind zum Etikettieren jeweils zwei Magazine 23 und zwei Gurttransporte 24 erforderlich.

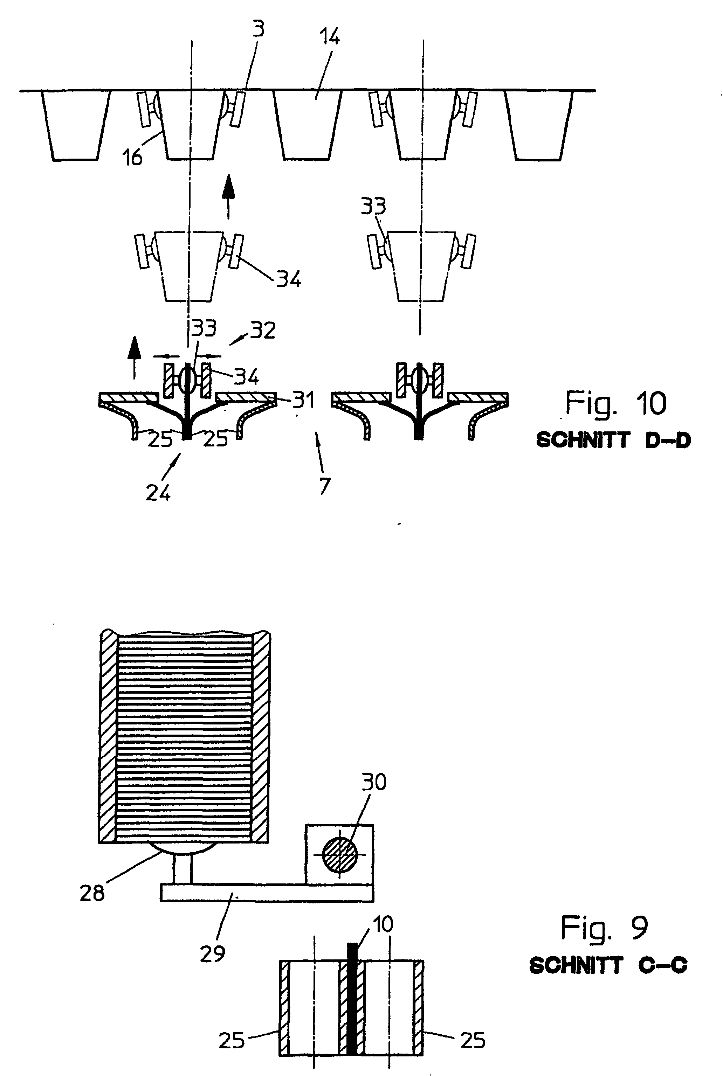

Figur 10 zeigt das Übernehmen der Etiketten 10 aus den Fördergurten 25. Über eine Kippeinrichtung 31 werden die Fördergurte 25 im Bereich unterhalb der Folienbahn 3 seitlich weggeschwenkt, so dass die Übergabeeinrichtung 32, bestehend aus Saugern 33 und Aufnahme 34, die Etiketten 10 ansaugen, anheben und durch Auseinanderfahren der Aufnahmen 34 öffnet, sodass beim weiteren Aufwärtsbewegen der Aufnahmen 34 mit den Saugern 33 das entfaltete Etikett 10 auf die Behälterwand 16 aufgezogen wird.
Bei dieser Art der Etikettierung kann kein Kleberauftrag auf die Etiketten 10 erfolgen, sondern nur durch eine vorangesetzte Leimauftrageinrichtung zwischen Formstation 5 und Etikettierstation 7. Ansonsten gelten bei dieser Ausführung der Etikettiereinrichtung die Gestaltungsmerkmale bezüglich Anordnung einer Fülleinrichtung 39 und Siegeleinrichtung 40 sowie einer Heizeinrichtung für Etiketten 10 mit Heißkleber bzw. für Etiketten 10 aus Kunststoff analog.

In bestimmten Fällen kann es erforderlich sein, die aus der Transporteinrichtung 11, 24 entnommenen Etiketten 10 vor dem Aufbringen auf die Behälterwand 16 in eine bestimmte Lage zu bringen, sodass z. B. ein Aufdruck immer von einer Seite des Behälters 14 aus gelesen werden kann. Stehen die Etiketten 10 verdreht wird vorgeschlagen, die Übergabeeinrichtung 15, 32 so zu gestalten, dass sie verdreht werden kann. Über Einrichtungen, wie Druckmarkenleser, wird die Lage der Etiketten 10 erfasst und sie werden in richtige Lage gebracht.

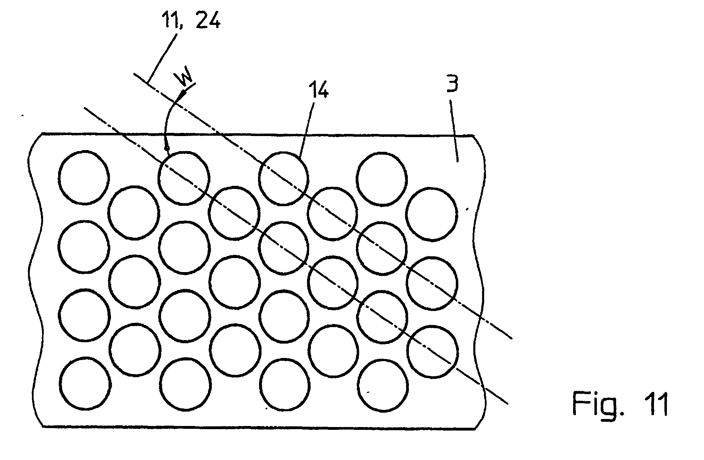

In Figur 11 ist die versetzte Anordnung von runden Behältern 14 im Folienband 3 dargestellt, die Vorteile bei der Materialausnutzung bietet. In diesem Fall wird die Transporteinrichtung 11, 24 unter einem Winkel W zwischen 30° und 60°schräg zur Transportrichtung der Folienbahn 3 angeordnet.

## Patentansprüche

1. Verfahren zum Herstellen von leeren oder gefüllten Behältern (14) aus thermoplastischem Kunststoff, deren Wand mit einem ringförmigen Etikett (10) aus Pappe, Papier oder Kunststoff versehen ist, das nach dem Tiefziehen auf die noch im Folienband (3) hängenden Behälter (14) aufgebracht wird, und bei dem die Behälter (14) nach dem Etikettieren aus dem Folienband (3) ausgetrennt werden, **gekennzeichnet durch** folgende Merkmale:
a) Herstellen von ringförmigen Etiketten (10) und Umsetzen der Etiketten (10) in eine Transporteinrichtung (11,24);
b) führen der Etiketten (10) mit der Transporteinrichtung (11,24) in eine Stellung unterhalb der im Folienband (3) hängenden Behälter (14);
c) entnehmen der Etiketten (10) aus der Transporteinrichtung (11,24) und Überführen auf die Wand (16) der Behälter (14).

2. Verfahren nach Anspruch 1 **dadurch gekennzeichnet, dass** die ringförmigen Etiketten (10) in einer mit der Behälterformmaschine (8) verketteten Etikettenformmaschine (9) aus Bahnen oder Zuschnitten (35) hergestellt und direkt, ggf. über einen Zwischenpuffer (19), der Transporteinrichtung (11,24) zugeführt werden.

3. Verfahren nach Anspruch 1, **dadurch gekennzeichnet, dass** die zuvor gefertigten ringförmigen Etiketten (10) in Magazinen (23,37) bereitgehalten, aus diesen mit einer Entnahmeeinrichtung (36,38) entnommen und an die Transporteinrichtung (11,24) übergeben werden.

4. Verfahren nach Anspruch 3, **dadurch gekennzeichnet, dass** die Etiketten (10) in geöffnetem Zustand gestapelt ineinandersitzend in den Magazinen (20,23) bereitgehalten werden.

5. Verfahren nach Anspruch 3, **dadurch gekennzeichnet, dass** die Etiketten (10) in gefaltetem Zustand in den Magazinen (23,37) bereitgehalten werden.

6. Verfahren nach Anspruch 5, **dadurch gekennzeichnet, dass** die Etiketten (10) nach der Entnahme aus den Magazinen (23) entfaltet und in diesem Zustand an die Transporteinrichtung (11) übergeben werden.

7. Verfahren nach Anspruch 5, **dadurch gekennzeichnet, dass** die Etiketten (10) in gefaltetem Zustand an die Transporteinrichtung (24) übergeben und nach bzw. bei der Entnahme aus der Transporteinrichtung (24) entfaltet werden.

8. Verfahren nach einem der Ansprüche 1 bis 7, **dadurch gekennzeichnet, dass** die Etiketten (10) nach der Entnahme aus der Transporteinrichtung (11) in dessen Transportrichtung auf das Stichmaß (X) der Behälter (10) verschoben werden.

9. Verfahren nach einem der Ansprüche 1 bis 8, **dadurch gekennzeichnet, dass** bei mehrreihiger Formung von Behältern (14) pro Nutzen die Zufuhr der Etiketten (10) mit mehreren, im vielfachen Abstand (A) der Behälterreihen angeordneten Transporteinrichtungen (11,24) erfolgt.

10. Verfahren nach einem der Ansprüche 1 bis 9, **dadurch gekennzeichnet, dass** vor der Vereinigung die Behälterwand (16) und/oder jedes Etikett (10) mit Kleber versehen wird.

11. Verfahren nach einem der Ansprüche 1 bis 9, **dadurch gekennzeichnet, dass** die Verbindung Behälterwand (16) mit Etikett (10) durch Beheizen von mit Schmelzkleber versehenen Etiketten (10) erfolgt.

12. Verfahren nach einem der Ansprüche 1 bis 9, **dadurch gekennzeichnet, dass** die Behälter (14) so mit Hinterschnitten geformt sind, dass die aufgeschobenen Etiketten (10) formschlüssig gehalten werden.

13. Verfahren nach einem der Ansprüche 1 bis 9, **dadurch gekennzeichnet, dass** bei Verwendung von Etiketten (10) aus Kunststoff eine Aufschrumpfung der Etiketten (10) durch Wärmezufuhr erfolgt.

14. Verfahren nach einem der Ansprüche 11 bis 13, **dadurch gekennzeichnet, dass** zusätzlich eine Fixierung der Etiketten (10) durch Kleber erfolgt.

15. Verfahren nach Anspruch 13 oder 14, **dadurch gekennzeichnet, dass** das Aufschrumpfen der Etiketten (10) nach dem Befüllen der Behälter (14) erfolgt.

16. Verfahren nach einem der Ansprüche 1 bis 15, **dadurch gekennzeichnet, dass** die Etiketten (10) nach der Entnahme aus der Transporteinrichtung (11,24) verdreht und in gewünschte Lage gebracht werden.

17. Verfahren nach einem der Ansprüche 1 bis 16, **dadurch gekennzeichnet, dass** die Behälter (14) vor oder nach dem Etikettieren gefüllt und mit einer Deckfolie versiegelt werden.

18. Vorrichtung zum Herstellen von gefüllten oder leeren Behältern (14) aus thermoplastischem Kunststoff, deren Wand mit einem Etikett (10) aus Papier, Pappe oder Kunststoff versehen ist, das nach dem Tiefziehen auf die noch im Folienband (3) hängenden Behälter (14) aufgebracht wird, mit einer Heizeinrichtung für das Folienband (3), einem taktweise arbeitenden Folientransport und einer Formstation (5) sowie mit einer der Formstation (5) nachgeschalteten Etikettierstation (7) mit Einrichtungen zum Überführen von Etiketten (10) auf die Wand der noch im Folienband (3) hängenden Behälter (14) und mit einer der Etikettierstation (7) nachgeschalteten Stanzstation (22) zum Austrennen der Behälter (14) aus dem Folienband (3), **gekennzeichnet durch** folgende Merkmale:
a) eine Transporteinrichtung (11,24) mit Einrichtungen (11,34) zum Aufnehmen von fertig geformten ringförmigen Etiketten (10) in gefaltetem oder entfaltetem Zustand und zum Führen unter die Folienbahn (3);
b) eine Entnahmeeinrichtung (36,38) zwischen einer vorgeschalteten Etikettenformmaschine (9) für die Etiketten (10) bzw. zwischen einem Magazin (23,37) und der Transporteinrichtung (11,24);
c) eine Übergabeeinrichtung (15,32) zum Aufnehmen der Etiketten (10) aus der Transporteinrichtung (11,24) in der Etikettierstation (7) und zum Überführen auf die Behälterwand (16).

19. Vorrichtung nach Anspruch 18, **dadurch gekennzeichnet, dass** die Transporteinrichtung aus einem oder mehreren Kammerbändern (11) mit umlaufenden Kammern (12) zur Aufnahme entfalteter Etiketten (10) besteht.

20. Vorrichtung nach Anspruch 19, **dadurch gekennzeichnet, dass** die Kammern (12) mit einer Ansaugeinrichtung für die Etiketten (10) versehen sind.

21. Vorrichtung nach Anspruch 19 oder 20, **dadurch gekennzeichnet, dass** die Entnahmeeinrichtung (36) so ausgebildet ist, dass sie beim Entnehmen gefalteter Etiketten (10) aus einem Magazin (23) diese entfaltet.

22. Vorrichtung nach einem der Ansprüche 18 bis 21, **dadurch gekennzeichnet, dass** die Übergabeeinrichtung (15) mit in Transportrichtung der Transporteinrichtung (11) an Führungen (42) verschiebbaren Halteeinrichtungen für die Etiketten (10) versehen ist.

23. Vorrichtung nach Anspruch 18, **dadurch gekennzeichnet, dass** die Transporteinrichtung aus einem Gurttransport (24) mit paarweise umlaufenden Fördergurten (25) besteht, die so in Wirkverbindung stehen dass sie gefaltete Etiketten (10) zwischen sich aufnehmen und festhalten können.

24. Vorrichtung nach Anspruch 23, **dadurch gekennzeichnet, dass** die Übergabeeinrichtung (32) so ausgebildet ist, dass sie beim oder nach dem Entnehmen der gefalteten Etiketten (10) aus dem Gurttransport (24) diese entfaltet und dann auf die Behälterwand (16) überführt.

25. Vorrichtung nach einem der Ansprüche 18 bis 24, **gekennzeichnet durch** mehrere, im mehrfachen Abstand der Behälterreihen angeordnete Transporteinrichtungen (11,24).

26. Vorrichtung nach einem der Ansprüche 18 bis 25, **gekennzeichnet durch** eine Leimauftrageinrichtung (18) für Kleber auf die Behälterwand (16) und/oder auf die Etiketten (10).

27. Vorrichtung nach einem der Ansprüche 18 bis 26, **gekennzeichnet durch** eine Heizeinrichtung für die Etiketten (10).

28. Vorrichtung nach einem der Ansprüche 18 bis 27, **gekennzeichnet durch** eine vor oder nach der Etikettierstation (7) angeordnete Fülleinrichtung (39) und eine nachfolgende Siegelungseinrichtung (40).

29. Vorrichtung nach einem der Ansprüche 18 bis 28, **dadurch gekennzeichnet, dass** die Übergabeeinrichtung (15,32) für die Etiketten (10) drehbar ausgebildet ist.

30. Vorrichtung nach einem der Ansprüche 17 bis 29, **dadurch gekennzeichnet, dass** die Transporteinrichtung (11,24) senkrecht zur Transportrichtung der Folienbahn (3) angeordnet ist.

31. Vorrichtung nach einem der Ansprüche 17 bis 29, **dadurch gekennzeichnet, dass** die Transporteinrichtung (11,24) unter einem Winkel (W) zwischen 30° und 60°zur Transportrichtung der Folienbahn (3) angeordnet ist

## Claims

1. Method of producing empty or filled containers (14) of thermoplastic plastics material, the wall of which is provided with an annular label (10) of cardboard, paper or plastics material which, after the deep-drawing, is applied to the containers (14) still suspended in the film strip (3), and in which the containers (14) are separated from the film strip (3) after the labelling, **characterised by** the following features:
a) production of annular labels (10) and transfer of the labels (10) to transport equipment (11, 24);
b) conducting the labels (10) by the transport equipment (11, 24) to a setting below the containers (14) suspended in the film strip (3); and
c) removing the labels (10) from transport equipment (11, 24) and transferring them to the wall (16) of the containers (14).

2. Method according to claim 1, **characterised in that** the annular labels (10) are produced in a label-forming machine (9), which is linked with the container moulding machine (8), from webs or blanks (35) and directly feeding them, in a given case by way of an intermediate buffer (19), to the transport equipment (11, 24).

3. Method according to claim 1, **characterised in that** the previously produced annular labels (10) are held ready in magazines (23, 37), removed from these by a removing device (36, 38) and transferred to the transport equipment (11, 24).

4. Method according to claim 3, **characterised in that** the labels (10) are kept ready in opened state stacked in the magazines (20, 23) to be seated in one another.

5. Method according to claim 3, **characterised in that** the labels (10) are kept ready in folded state in the magazines (23, 37).

6. Method according to claim 5, **characterised in that** the labels (10) are unfolded after removal from the magazines (23) and are transferred in this state to the transport equipment (11).

7. Method according to claim 5, **characterised in that** the labels (10) are transferred in folded state to the transport equipment (24) and are unfolded after or during removal from the transport equipment (24).

8. Method according to one of claims 1 to 7, **characterised in that** the labels (10) after removal from the transport equipment (11) are displaced in the transport direction thereof at the pitch dimension (X) of the containers (10).

9. Method according to one of claims 1 to 8, **characterised in that** in the case of multi-row formation of containers (14) per batch the feed of the labels (10) is carried out by several items of transport equipment (11, 24) arranged at the multiple spacing (A) of the container rows.

10. Method according to one of claims 1 to 9, **characterised in that** the container wall (16) and/or each label (10) is or are provided with adhesive before the joining together.

11. Method according to one of claims 1 to 9, **characterised in that** the connection of container wall (15) with label (10) is carried out by heating labels (10) provided with hotmelt adhesive.

12. Method according to one of claims 1 to 9, **characterised in that** the containers (14) are so formed with undercuts that the pushed-on labels (10) are held by mechanically positive connection.

13. Method according to one of claims 1 to 9, **characterised in that** in the case of use of labels (10) of plastics material a shrinking-on of the labels (10) is carried out by the feed of heat.

14. Method according to one of claims 11 to 13, **characterised in that** a fixing of the labels (10) is additionally carried out by cement.

15. Method according to claim 13 or 14, **characterised in that** the shrinking-on of the labels (10) is carried out after filling the containers (14).

16. Method according to one of claims 1 to 15, **characterised in that** the labels (10) after removal from the transport equipment (11, 24) are turned and brought into desired position.

17. Method according to one of claims 1 to 16, **characterised in that** the containers (14) are filled before or after the labelling and are sealed by a top foil.

18. Device for producing filled or empty containers (14) from thermoplastic plastics material, the wall of which is provided with a label (10) of paper, cardboard or plastics material which, after the deep-drawing, is applied to the containers (14) still suspended in the film strip (3), with a heating device for the film strip (3), a cyclically operating film transport and a moulding station (5) as well as with a labelling station (7), which is connected downstream of the moulding station (5), with devices for transfer of labels (10) to the wall of the containers (14) still suspended in the film strip (3) and with a punching station (22), which is connected downstream of the labelling station (7), for separating the containers (14) from the film strip (3), **characterised by** the following features:
a) transport equipment (11, 24) with devices (11, 34) for picking up annular labels (10), which are formed to be finished, in folded or unfolded state and for conducting them under the film web (3);
b) a removing device (36, 38) between an upstream label forming machine (9) for the labels (10) or between a magazine (23, 37) and the transport equipment (11, 24); and
c) a transfer device (15, 32) for picking up the labels (10) from the transport equipment (11, 24) in the labelling station (7) and for transferring them to the container wall (16).

19. Device according to claim 18, **characterised in that** the transport equipment consists of one or more compartmented belts (11) with circulating compartments (12) for the reception of unfolded labels (10).

20. Device according to claim 19, **characterised in that** the chambers (12) are provided with a suction device for the labels (10).

21. Device according to claim 19 or 20, **characterised in that** the removing device (36) is so constructed that on removal of folded labels (10) from a magazine (23) it unfolds these.

22. Device according to one of claims 18 to 21, **characterised in that** the transfer device (15) is provided with holding devices, which are displaceable at guides (42) in transport direction of the transport equipment (11) for the labels (10).

23. Device according to claim 18, **characterised in that** the transport equipment consists of a belt transport device (24) with conveying belts (25) which circulate in pairs and which are so disposed in operative connection that they receive and can firmly hold the folded labels (10) therebetween.

24. Device according to claim 23, **characterised in that** the transfer device (32) is so constructed that during or after removal of the folded labels (10) from the belt transport device (24) it unfolds these and then transfers them to the container wall (16).

25. Device according to one of claims 18 to 24, **characterised by** several items of transport equipment (11, 24) arranged at the multiple spacing of the container rows.

26. Device according to one of claims 18 to 25, **characterised by** a glue application device (18) for cement on the container wall (16) and/or on the labels (10).

27. Device according to one of claims 18 to 26, **characterised by** a heating device for the labels (10).

28. Device according to one of claims 18 to 27, **characterised by** a filling device (39) arranged in front of or after the labelling station (7) and a downstream sealing device (40).

29. Device according to one of claims 18 to 28, **characterised in that** the transfer device (15, 32) for the labels (10) is constructed to be rotatable.

30. Device according to one of claims 17 to 29, **characterised in that** the transport equipment (11, 24) is arranged perpendicularly to the transport direction of the film web (3).

31. Device according to one of claims 17 to 29, **characterised in that** the transport equipment (11, 24) is arranged at an angle (W) between 30° and 60° relative to the transport direction of the film web (3).

## Revendications

1. Procédé pour produire des récipients (14) vides ou remplis en matière thermoplastique dont la paroi est munie d'une étiquette annulaire (10) en carton, papier ou matière plastique qui est appliquée sur les récipients (14) encore suspendus à la bande de feuille (3) après l'emboutissage et dans lequel les récipients (14) sont séparés de la bande de feuille (3) après l'étiquetage,
**caractérisé par** les caractéristiques suivantes :
a) produire des étiquettes annulaires (10) et insérer les étiquettes (10) dans un dispositif de transport (11, 24) ;
b) amener les étiquettes (10) avec le dispositif de transport (11, 24) dans une position en dessous des récipients (14) suspendus dans la bande de feuille (3) ;
c) prélever les étiquettes (10) sur le dispositif de transport (11, 24) et les transférer à la paroi (16) des récipients (14).

2. Procédé selon la revendication 1,
**caractérisé en ce que**
les étiquettes annulaires (10) sont produites à partir de bandes ou de flans (35) dans une machine à former les étiquettes (9) qui est accouplée à la machine à former les récipients (8), et sont amenées directement au dispositif de transport (11, 24), éventuellement avec interposition d'un tampon intermédiaire (19).

3. Procédé selon la revendication 1,
**caractérisé en ce que**
les étiquettes annulaires (10) fabriquées préalablement sont tenues prêtes dans des magasins (23, 27), prélevées dans ces derniers au moyen d'un dispositif de prélèvement (36, 38) et transférées au dispositif de transport (11, 24).

4. Procédé selon la revendication 3,
**caractérisé en ce que**
les étiquettes (10) sont maintenues prêtes, à l'état ouvert, emboîtées les unes dans les autres, en empilement, dans les magasins (20, 23).

5. Procédé selon la revendication 3,
**caractérisé en ce que**
les étiquettes (10) sont maintenues prêtes à l'état plié dans les magasins (23, 37).

6. Procédé selon la revendication 5,
**caractérisé en ce que**
les étiquettes (10) sont dépliées après leur prélèvement dans les magasins (23) et transférées dans cet état au dispositif de transport (11).

7. Procédé selon la revendication 5,
**caractérisé en ce que**
les étiquettes (10) sont transférées à l'état plié au dispositif de transport (24) et sont dépliées après ou pendant le prélèvement dans le dispositif de transport (24).

8. Procédé selon une des revendications 1 à 7,
**caractérisé en ce que**,
après leur prélèvement dans le dispositif de transport (11), les étiquettes (10) sont déplacées dans la direction de transport de ce dispositif pour être placées à la cote d'écartement (X) des récipients (14).

9. Procédé selon une des revendications 1 à 8,
**caractérisé en ce que**
dans le cas du formage de récipients (14) en plusieurs rangées, l'acheminement des étiquettes (10) s'effectue, pour chaque ébauche, avec plusieurs dispositifs de transport (11, 24) disposés à un écartement multiple de l'écartement (A) des rangées de récipients.

10. Procédé selon une des revendications 1 à 9,
**caractérisé en ce que**
avant l'assemblage, la paroi (16) des récipients et/ou de chaque étiquette (10) est munie de colle.

11. Procédé selon une des revendications 1 à 9,
caxactérisé en ce que
l'assemblage entre la paroi (16) des récipients et l'étiquette (10) s'effectue par chauffage d'étiquettes (10) munies d'une colle fusible.

12. Procédé selon une des revendications 1 à 9,
**caractérisé en ce que**
les récipients (14) sont formés avec des contre-dépouilles de telle sorte que les étiquettes (10) emmanchées sont tenues par liaison de forme.

13. Procédé selon une des revendications 1 à 9,
**caractérisé en ce que**
dans le cas de l'utilisation d'étiquettes (10) en matière plastique, il se produit une rétraction des étiquettes (10) par apport de chaleur.

14. Procédé selon une des revendications 11 à 13,
**caractérisé en ce qu'**
il se produit en supplément une fixation des étiquettes (10) par une colle.

15. Procédé selon une des revendications 13 ou 14,
**caractérisé en ce que**
la rétraction des étiquettes (10) s'effectue après le remplissage des récipients (14).

16. Procédé selon une des revendications 1 à 15,
**caractérisé en ce que**
les étiquettes (10) sont tournées et placées dans la position souhaitée après avoir été prélevées sur le dispositif de transport (11, 24).

17. Procédé selon une des revendications 1 à 16,
**caractérisé en ce que**
les récipients (14) sont remplis et fermés au moyen d'une feuille de recouvrement avant ou après l'étiquetage.

18. Dispositif pour produire des récipients (14) vides ou remplis en matière thermoplastique dont la paroi est munie d'une étiquette (10) en papier, carton ou matière plastique qui est appliquée sur les récipients (14) encore suspendus à la bande de feuille (3) après l'emboutissage, comprenant un dispositif de chauffage pour la bande de feuille (3), un transport de feuille travaillant de façon discontinue, et une station de formage (5) ainsi qu'une station d'étiquetage (7) placée en aval de la station de formage (5) et qui comprend elle-même des dispositifs pour transférer des étiquettes (10) à la paroi des récipients (14) encore suspendus dans la bande de feuille (3), et une station de découpage (22) placée en aval de la station d'étiquetage (7), destinée à séparer les récipients (14) de la bande de feuille (3),
**caractérisé par**
a) un dispositif de transport (11, 24) comprenant des dispositifs (11, 34) pour recevoir des étiquettes annulaires (10) entièrement formées dans un état plié ou déplié et pour les placer au-dessous de la bande de feuille (3) ;
b) un dispositif de prélèvement (36, 38) placé entre une machine de formage d'étiquettes (9) placée en amont pour former les étiquettes (10) ou entre un magasin (23, 37) et le dispositif de transport (11, 24);
c) un dispositif de transfert (15, 32) destiné à recevoir les étiquettes (10) prises sur le dispositif de transport (11, 24) dans la station d'étiquetage (7) et à les transférer à la paroi (16) du récipient.

19. Dispositif selon la revendication 18,
**caractérisé en ce que**
le dispositif de transport est composé d'une ou de plusieurs bandes à chambres (11) possédant des chambres (12) entraînées en circulation pour recevoir des étiquettes (10) dépliées.

20. Dispositif selon la revendication 19,
**caractérisé en ce que**
les chambres (12) sont munies d'un dispositif d'aspiration pour les étiquettes (10).

21. Dispositif selon la revendication 19 ou 20,
**caractérisé en ce que**
le dispositif de prélèvement (36) est construit de manière à déplier les étiquettes (10) au moment de leur prélèvement sur un magasin (23).

22. Dispositif selon une des revendications 18 à 21,
**caractérisé en ce que**
le dispositif de transfert (15) est muni de dispositifs de retenue pour les étiquettes (10) qui peuvent se déplacer en translation le long de guides (42) dans la direction de transport du dispositif de transport (11).

23. Dispositif selon la revendication 18,
**caractérisé en ce que**
le dispositif de transport est composé d'un transporteur à courroie (24) possédant des courroies transporteuses (25) circulant en circuit fermé par paires, qui sont en liaison active de manière qu'elles puissent recevoir et retenir entre elles les étiquettes (10) pliées.

24. Dispositif selon la revendication 23,
**caractérisé en ce que**
le dispositif de transfert (32) est construit de manière à déplier les étiquettes au moment où, après le prélèvement des étiquettes pliées (10) sur le transporteur à courroie (24) et à les transférer ensuite à la paroi (16) du récipient.

25. Dispositif selon une des revendications 18 à 24,
**caractérisé par**
plusieurs dispositifs de transport (11, 24) disposés à un écartement multiple de celui des rangées de récipients.

26. Dispositif selon une des revendications 18 à 25,
**caractérisé par**
un dispositif d'encollage (18) pour déposer de la colle sur la paroi (16) des récipients et/ou sur les étiquettes (10).

27. Dispositif selon une des revendications 18 à 26,
**caractérisé par**
un dispositif de chauffage pour les étiquettes (10).

28. Dispositif selon une des revendications 18 à 27,
**caractérisé par**
un dispositif de remplissage (39) disposé en amont ou en aval de la station d'étiquetage (7) et un dispositif de fermeture (40) placé en aval.

29. Dispositif selon une des revendications 18 à 28,
**caractérisé en ce que**
le dispositif de transfert (15, 32) pour les étiquettes (10) est rotatif,

30. Dispositif selon une des revendications 17 à 29,
**caractérisé en ce que**
le dispositif de transport (11, 24) est disposé perpendiculairement à la direction de transport de la bande de feuille (3).

31. Dispositif selon une des revendications 17 à 29,
**caractérisé en ce que**
le dispositif de transport (11, 24) est disposé en formant un angle (W) d'entre 30 ° et 60 ° avec la direction de transport de la bande de feuille (3).
